# EUROPEAN PATENT SPECIFICATION

(11) **EP 1 637 804 B1**
(45) Date of publication and mention of the grant of the patent: **29.06.2011**
(21) Application number: 05425631.8
(22) Date of filing: 09.09.2005
(51) Int. Cl.: F21V 21/092

(54) **Suction cup device used to hang light objects on the wall**
Saugnapf zum Befestigen von Objekten an einer Wand
Ventouse pour fixer des objets sur le mur

(30) Priority: 16.09.2004 IT MC20040034 U
(43) Date of publication of application: 22.03.2006
(73) Proprietor: TRE B S.r.l., 60027 Osimo, AN (IT)
(72) Inventor: Bruni, Tonino, 60027 Osimo (AN) (IT)
(74) Representative: Baldi, Claudio

(56) References cited:
- DE-A1- 10 107 780
- DE-A1- 19 755 063
- US-B1- 6 308 923
- US-B1- 6 550 735
- US-B1- 6 609 689

## Description

The present patent application refers to a suction cup device used to hang light objects on the wall.

Suction cup devices currently available on the market are characterised by multiple designs, although they have the same constructive layout and are mostly made of plastic material.

According to the traditional constructive layout, a plate shaped as a spherical cap contains a suction cup provided with a central stem, on which axial traction is exerted to retract the suction cup inside the spherical cap.

In this perspective, the stem is inserted through a collar in the centre of the plate, with a protruding end being coupled with an up-and-over catch used to exert axial traction on the stem.

More exactly, the catch is coupled with the stem by means of a transversal pin, which acts as pivoting pin for the oscillations of the said catch, which can have two end-of-travel positions, one idle position in vertical direction and one working position in horizontal direction, assuming that the suction-cup device is to be fixed onto a vertical wall.

When the catch is in vertical position, no interference exists between the catch itself and the collar of the plate; therefore the stem is not subject to traction and, consequently, the suction cup is not retracted inside the plate.

Vice versa, during the lying down travel of the catch, interference exists between the collar and the pivoted end of the catch, thus subjecting the stem and the suction cup to backward traction, it being evident that the suction cup retraction determines a depression sufficient to ensure wall fixing.

The free end of the up-and-over catch generally ends with hooks with eyelet or supporting clips for the objects to be hung on the wall.

The available suction cup devices are impaired by the fact that they do not ensure the stable stop of the catch in lying down position, which corresponds to retraction of the suction cup inside the plate, with consequent adherence of the device to the wall.

In other words, the suction cup devices of known type are impaired by the risk of losing adherence to wall, because of accidental shocks against the catch that, although not violent, are however sufficient to determine the upward overturning of the catch, with consequent fall of the device and the object supported by it.

On the other side, it must be noted that in currently available suction cup devices the stop of the catch in lying down working position is only ensured by the friction resistance between cooperating and interfering sections of the catch and collar, without any matching and blocking means to prevent the accidental upward overturning of the catch.

US 6 308 923 discloses a suction support assembly including a deformable membrane connected to a fulcrum displaceable by a lever which is formed with a cam surface pivotal between engaging end disengaging position.

DE 101 07 780 discloses a clothes hanger support comprises an arm with notches, into which the hanger hooks fit. This is attached by a pivot to a suction cup which holds it on the wall.

The purpose of the present invention is to provide a solution to the aforementioned inconvenience, by devising an improved suction cup device that, although with traditional constructive and functional layout, is provided with means used to automatically hook up the up-and-over catch, when it is brought at the end of lying down travel, to ensure that the working position is maintained until the user voluntarily raises the catch, exerting an upward force to win the resistance offered by the hook-up means.

In this perspective, the collar in the centre of the suction cup holding plate of the device of the invention is provided with a tooth designed to interfere with the section of the pivoted end of the catch, in order to determine click-type engagement between collar and catch, when the catch is brought at the end of the lying down travel.

In other words, at the end of the lying down travel, the pivoted end of the catch opposes and passes over the tooth, due to elastic deformation of the suction cup, which practically acts as return spring to stabilise the lying down position of the catch, thus preventing accidental overturning of the catch upwards.

For major clarity, the description of the device according to the present invention continues with reference to the enclosed drawings, which are intended for purposes of illustration only and not in a limiting sense, whereby:
- Fig. 1 is an exploded drawing of the suction cup device of the invention;
- Fig. 2 is a side view of the device of the invention with catch in vertical idle position;
- Fig. 3 is a side view of the device of the invention with catch near the end of lying down travel when it interferes with the tooth on the suction cup-holding collar;
- Fig. 4 is a side view of the device of the invention with catch in horizontal working position.

The suction cup device of the invention is of the type composed of a suction cup (1), a plate (2) and an up-and-over catch (3).

The suction cup (1) is made of a soft disk (1a) provided with a central rigid stem (1b).

The plate (2) consists in a rigid spherical cap with diameter slightly smaller than the disk (1a), externally provided with a central collar (2a), where the central stem (1 b) is inserted, protruding with a short ending section (1c).

The up-and-over catch (3) has a box-shaped hollow shank (3a) with U-shaped cross-section, which houses the short ending section (1c) of the stem (1b), which is provided with a hole (1d) for a pin (4) used to pivot the up-and-over catch (3) to the ending section (1c).

The hollow shank (3a) is provided with a hole (5) used to insert the pivoting pin (4).

The free end of the up-and-over catch (3) is provided with a eyelet (3b) designed to support objects or means used to support them.

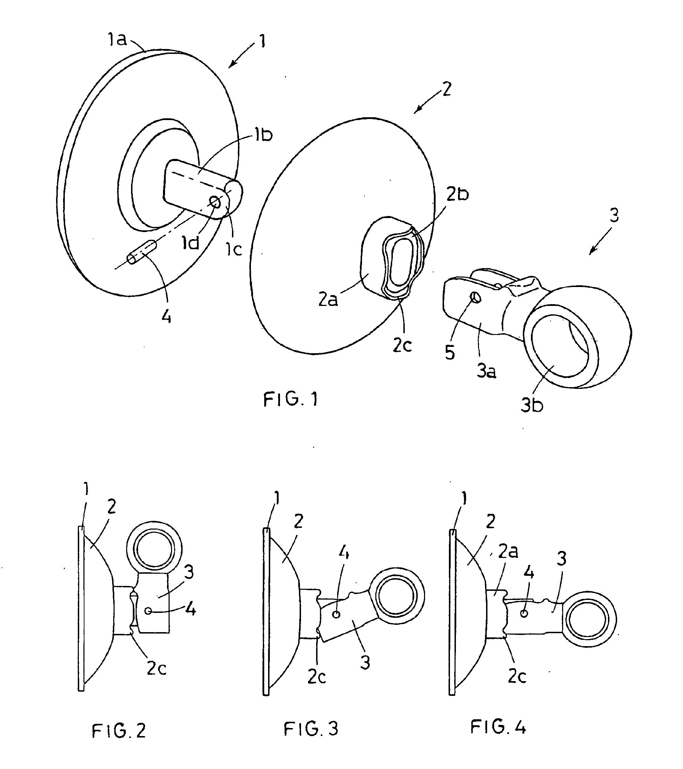

As shown in Fig. 3, the edge (2b) of the central collar (2) is provided with a tooth (2c) shaped and dimensioned in such a way that it interferes with the end of the hollow shank (3a) of the catch (3) immediately before the catch (3) is brought to the end of lying down travel.

Regardless of the interference, the catch (3) can reach the lying down position by passing over the tooth (2c) from outside inwards due to the elastic deformation of the disk (1a) of the suction cap (1), that determines a slight backward movement of the catch (3), which is immediately after pushed forward against the edge (2b) inside the tooth (2c), as shown in Fig. 4.

To raise the catch (3) from lying down position, the user needs to exert an overturning force to make the catch (3) pass over the tooth (2c) from inside outwards.

In the preferred embodiment of the invention, the edge (2b) of the collar (2a) is provided with two teeth (2c) in diametrical opposite position, of which one only interferes with the end of the hollow shank (3a).

The presence of the two teeth (2c) is intended to make assembly between catch (3) and plate (2) easier and faster, without having to follow a specific assembly direction.

## Claims

1. Suction cup device used to hang light objects on the wall, of the type composed of:
- a suction cup (1) made of a soft disk (1 a) provided with a central rigid stem (1b);
- a plate (2) consisting in spherical cap externally provided with a central collar (2a) where the central stem (1 b) is inserted, protruding with a short ending section (1 c);
- an up-and-over catch (3) made of a box-shaped hollow shank (3a) with U-shaped cross-section, which houses the short ending section (1 c) of the stem (1 b), which is provided with a hole (1d) for a pin (4) used to pivot the ending section (1 c) to the up-and-over catch (3) provided with a hole (5) on the hollow shank (3a);
device being **characterised in that**
the plate (2) is in rigid material,
the edge (2b) of the central collar (2a) of the plate (2) is provided with at least one tooth (2c) shaped and dimensioned in such a way that it interferes with the end of the hollow shank (3a) of the catch (3) immediately before the catch (3) is brought to the end of lying down travel, in order to determine click-type engagement between collar (2a) and catch (3), when the catch (3) is brought at the end of the lying down travel.

2. Suction cup device as defined in above claim, **characterised by** the fact that the edge (2b) of the central collar (2a) is provided with two identical teeth (2c) in diametrically opposite position.

## Patentansprüche

1. Saugnapfvorrichtung zur Wandhalterung von leichtgewichtigen Artikeln im Allgemeinen, des Typs, der besteht aus:
- einem Saugnapf (1), die aus einer Scheibe (1 a) aus weichem Material besteht und mit einem zentralen Schaft (1 b) aus hartem Material versehen ist;
- einem Beschlag (2), der aus einer kugelförmigen Kappe besteht, die außen einen zentralen Bund (2a) aufweist, in den inwendig der zentrale Schaft (1 b) eingesteckt ist, dessen kurzer Endabschnitt (1 c) daraus übersteht;
- ein Kipphaken (3), der aus einem Hohlschaft (3a) mit U-förmigem Querschnitt besteht, in dessen Innerem der kurze Endabschnitt (1 c) des Schaftes (1 b) untergebracht ist, an dem ein Loch (1 d) für einen Stift (4) herausgearbeitet ist, mit dem der Endabschnitt (1 c) an den Kipphaken (3) angelenkt ist, der mit einem Loch (5) an seinem Hohlschaft (3a) versehen ist;
**dadurch gekennzeichnet, dass**
der Beschlag (2) aus einem harten Material besteht
am Rand (2b) des zentralen Bundes (2a) des Beschlags (2) mindestens ein Zahn (2c) herausgearbeitet ist, dessen Profil und Größe derart sind, dass er mit dem Ende des Hohlschafts (3a) des Hakens (3) zusammenwirkt, kurz bevor dieser (3) seinen liegenden Endanschlag erreicht, um ein Einrasten zwischen dem Bund (2a) und dem Haken (3) zu bewirken, wenn der Haken (3) an das Ende seines Absenkhubs gebracht wird.

2. Saugnapfvorrichtung nach dem vorstehenden Anspruch, **dadurch gekennzeichnet, dass** auf dem Rand (2b) des zentralen Bundes (2a) zwei identische, diametral gegenüberliegende Zähne (2c) herausgearbeitet sind.

## Revendications

1. Dispositif à ventouse, pour le support à paroi d'articles en général de petit poids, du type constitué :
- d'une ventouse (1) composée d'un disque (1a), réalisé en matériel souple, doté d'une tige centrale (1 b), réalisée en matériel rigide ;
- d'un enjoliveur (2) qui consiste en une calotte sphérique présentant à l'externe un collier central (2a), où résulte enfilée depuis l'interne la dite tige centrale (1 b) qui en déborde pour un bref segment d'extrémité (1 c) ;
- d'un ergot basculant (3) composé d'une tige cave (3a), ayant section en forme de "U", à l'intérieur de laquelle est logé le bref segment d'extrémité (1 c) de la tige (1 b), en correspondance de laquelle un trou (1 d) est réalisé pour un pivot (4) à travers lequel le dit segment d'extrémité (1 c) est basculé par le dit ergot basculant (3) doté d'un trou (5) en correspondance de sa tige cave (3a) ; dispositif **caractérisé en ce que**
l'enjoliveur (2) est réalisé en matériel rigide
au moins une dent (2c) est réalisée sur le bord (2b) du collier central (2a) de l'enjoliveur (2), la dite dent ayant un profil et des dimensions telles à interférer avec l'extrémité de la tige cave (3a) de l'ergot basculant (3) juste avant que celui-ci (3) n'atteigne sa position de fin de course d'abaissement, afin de déterminer un engagement du type à déclic entre le collier (2a) et l'ergot basculant (3), lorsque l'ergot basculant (3) est déplacé vers l'extrémité de sa course d'abaissement.

2. Dispositif à ventouse selon la revendication précédente, **caractérisé en ce que** deux dents (2c) identiques et diamétralement opposées sont réalisées sur le bord (2b) du collier central (2a).
